# EUROPEAN PATENT APPLICATION

(11) **EP 2 722 810 A1**
(43) Date of publication of application: **23.04.2014**
(21) Application number: 13175059.8
(22) Date of filing: 04.07.2013
(51) Int. Cl.: G06Q 30/06

(54) **Commodity display information tabulation method, data structure, and recording medium recording the same**

(30) Priority: 22.10.2012 US 201213656921
(71) Applicant: Shin, Dongjoo, Tokyo 150-0047 (JP)
(72) Inventor: Shin, Dongjoo, Tokyo 150-0047 (JP)
(74) Representative: Haley, Stephen

(57) **Abstract**

A tabulation method is provided which can associate the display state of commodities with sales. A commodity display information tabulation method includes: a step of cutting out a commodity image of a commodity from image data in which the commodity is photographed as displayed on commodity display shelves; a step of searching a commodity database for a commodity code corresponding to the cut commodity image; a step of determining the number of shelves of the commodity display shelves and generating shelf number information; and a recording step of recording the commodity code, commodity image position data on the cut commodity image in the image data, the shelf number information, and auxiliary information together as commodity shelf information.

## Description

### BACKGROUND OF THE INVENTION

### 1. Field of the Invention

The present invention relates to a commodity display information tabulation method for use in the retail and other industries in order to grasp the state of displayed commodities, examine the relationship with sales, and create a shelf allocation plan for higher sales.

### 2. Description of the Prior Art

When selling commodities in a retail store, information about which commodity sells how much is important in determining which item to stock in what amount. POS systems are widely used for efficient implementation. Nowadays, bar codes on commodities selected by customers can be read at a checkout to not only check purchase amounts but also check the relationship with inventory and perform change management (see Japanese Patent Application Laid-Open No. Hei 05-120561).

A POS system can easily grasp sales of each individual commodity in a store, whereas no information is available as to what display state the commodities are offered in.

It is well known in the industry that the display mode of commodities themselves contributes largely to sales. Suggestions have been made as to the arrangement of commodities on display shelves, i.e., shelf allocation (see Japanese Patent Application Laid-Open No. Hei 05-342230).

The presence of such suggestions shows that higher exposure to customers is one of the major factors for increased commodity sales aside from marketability (i.e., attractive features of commodities themselves).

A specific examination of the relationship between the display state of commodities and sales has not been possible. The reason is that even in the presence of shelf allocation information, it has been not possible to determine whether commodities are actually displayed according to the shelf allocation information. The actual display state of commodities could be checked by examining commodity shelves after the commodities are displayed, whereas the examination requires a lot of work. There is little point in acquiring such information on only a single store. Information acquisition in many stores and data organization in a short time are needed.

Japanese Patent Application Laid-Open No. Hei 05-334409 discloses a method that can relatively easily input the display state of commodities actually displayed. The disclosed method includes taking a picture of the display state of commodities, cutting out images of commodities alone, and electronically recording the arrangement of the commodities according to display shelf information which is acquired from fixture information. Technologies for searching an image database containing a large number of images for an image similar to a desired image have been developed lately (see Japanese Patent Application Laid-Open No. 2004-318365).

Japanese Patent Application Laid-Open No. Hei 05-334409 has the advantage that the state of displayed commodities can be easily registered in an electronic manner. The use of fixture information, however, only allows the input of display conditions in the own store. In order to associate display information on commodities with sales and decide on a policy for shelf allocation, information about commodity display and sales in a plurality of stores is needed. The reason is that there is no guarantee that stores of even the same group use the same fixtures (commodity shelves).

The foregoing prior technologies do not even mention the technical idea of associating the display state of commodities with sales themselves.

### SUMMARY OF THE INVENTION

The present invention has been achieved in view of the foregoing problem. It is thus an object of the present invention to provide a commodity display information tabulation method that can associate the display state of commodities with sales to provide retailers with basic data for making a policy for shelf allocation and manufactures with basic data for making a policy for requesting display positions from retail stores.

More specifically, a commodity display information tabulation method according to the present invention includes:
a step of cutting out a commodity image of a commodity from image data in which the commodity is photographed as displayed on commodity display shelves;
a step of searching a commodity database for a commodity code corresponding to the cut commodity image;
a step of determining the number of shelves of the commodity display shelves and generating shelf number information; and
a recording step of recording the commodity code, commodity image position data on the cut commodity image in the image data, the shelf number information, and auxiliary information together as commodity shelf information.

A data structure according to the present invention is a data structure of data generated from photographed image data of commodity display shelves on which a commodity is displayed, the data structure including:
a store ID for identifying a store;
photographing date and time;
a commodity code corresponding to the photographed commodity;
shelf number information indicating on which shelf of the commodity display shelves the commodity obtained from the image data is displayed; and
a face number for indicating what numbered face the commodity is from a left end of the shelf indicated by the shelf number information.

The present invention generates shelf number information on a fixture on which commodities are displayed from photographed image data. The display state of the commodities can thus be acquired from only the photographed image data. Commodity images cut out from the photographed image data are subjected to searching of the commodity database by a search engine and converted into commodity codes. This allows high speed processing, and a large amount of information on photographed commodity display shelves can be computerized in a short time. Auxiliary information that is concurrently recorded can include sales information on each commodity, acquired from a POS system or the like. This makes it possible for the first time to provide the display state of commodities and its contribution to sales as specific information.

The data structure of data formed by the commodity display information tabulation method according to the present invention associates commodity codes with the display state of commodities. This provides the effect of making the relationship between sales and the display state of commodities understandable.

### BRIEF DESCRIPTION OF THE DRAWINGS

Fig. 1 is a diagram showing the configuration of a commodity display information tabulation system that implements the present invention;
Fig. 2 is a diagram showing a method for photographing commodity display shelves;
Fig. 3 is a diagram showing image data from a camera;
Fig. 4 is a partial enlarged view of Fig. 3;
Fig. 5 is a flowchart showing the processing procedure of a search engine;
Fig. 6 is a chart showing an example of the data structure of commodity shelf information;
Fig. 7 is a diagram visualizing work to be performed by an image processing program;
Fig. 8 is a flowchart showing the processing procedure of the image processing program;
Fig. 9 is a diagram showing commodity shelf information based on face numbers;
Fig. 10 is a chart showing the data structure of the commodity shelf information of Fig. 9;
Figs. 11A to 11C are diagrams showing the processing of tabulation software; and
Fig. 12 is a flowchart showing the processing procedure of the tabulation software.

### DETAILED DESCRIPTION OF THE EMBODIMENT

Hereinafter, the present invention will be described with reference to the drawings. While the following description provides an embodiment of the present invention, modifications may be made without departing from the gist of the present invention.

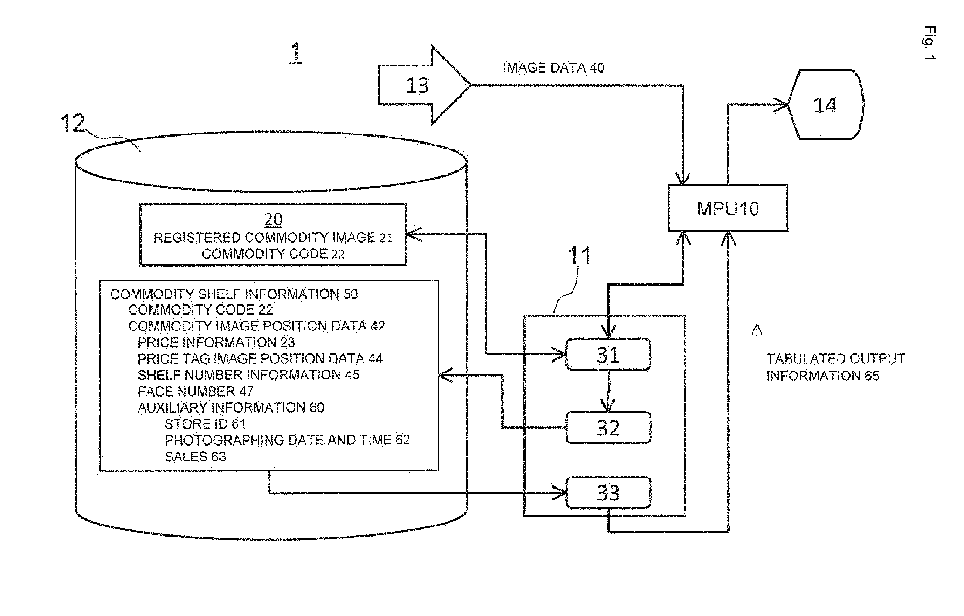

Fig. 1 shows the configuration of a commodity display information tabulation system 1 which performs the commodity display information tabulation method according to the present invention. The commodity display information tabulation system 1 according to the present invention is implemented by a computer including a memory 11 and a microprocessor unit (MPU) 10. Secondary storage means 12 is connected to the MPU 10. The secondary storage means 12 includes a hard disk (HD) or a semiconductor memory.

An image data input device 13 and an output device 14 may also be connected to the MPU 10. The image data input device 13 may be ordinary communication means. The output device 14 may include communication means capable of outputting electronic information, aside from a printer and/or a display.

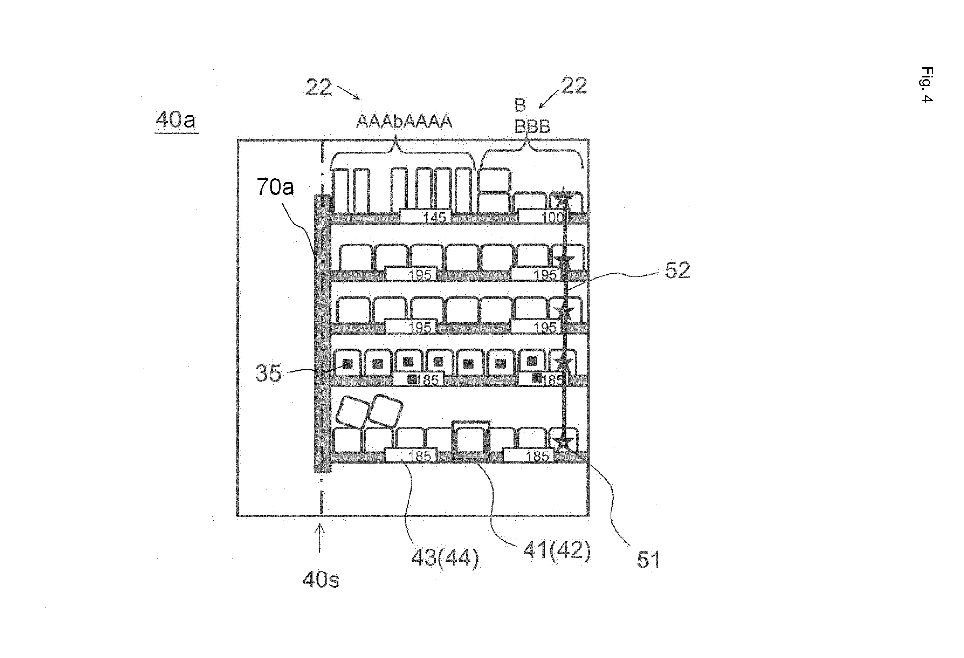

The secondary storage means 12 contains at least a commodity database 20 in advance. The commodity database 20 includes at least image data on commodities and commodity codes 22. The image data on commodities includes registered commodity images 21. The registered commodity images 21 may be only front images of the corresponding commodities or may include side, top, and bottom images in addition to front images. A search engine 31 compares the registered commodity images 21 with commodity images 41 cut out from photographed image data 40 (to be described with reference to Fig. 4) to check for a match. The commodity codes 22 may include data on manufactures and trade names.

To run the commodity display information tabulation system 1 according to the present invention on a computer, the search engine 31 may be loaded into the memory 11. The search engine 31 is stored and retained in the secondary storage means 12 when not in use. The search engine 31 cuts out commodity images 41 from the image data 40, selects registered commodity images 21 that coincide with the cut commodity images 41 from the commodity database 20, and outputs their commodity codes 22 and commodity image position data 42 corresponding to the coordinates of the cut positions. Search engines 31 like this are already known and available even through the Internet. Such a search engine 31 can retrieve corresponding registered commodity images 21 even if the commodity images 41 are distorted or partly hidden.

The search engine 31 can also cut out price tag images 43 (to be described with reference to Fig. 4) of price tag areas from the photographed image data 40. The search engine 31 can output price information 23 including characters and numerals on the tags, and price tag image position data 44 corresponding to the coordinates of the cut positions.

Aside from the search engine 31, an image processing program 32 is loaded and executed in the memory 11. The image processing program 32 generates at least shelf number information 45 on display shelves on the basis of the photographed image data 40 and the commodity images 41 cut out by the search engine 31. The image processing program 32 can paste the registered commodity images 21 and the price tag images 43 into a two-dimensional plane on the basis of the commodity image position data 42 and the price tag image position data 44.

The image processing program 32 records at least the commodity codes 22, the commodity image position data 42, the price information 23, the price tag image position data 44, and the shelf number information 45 collectively as commodity shelf information 50.

Auxiliary information 60 about the photographed image data 40 is also recorded as the commodity shelf information 50. The auxiliary information 60 includes identification information on the photographed store (store ID 61) and photographing date and time 62. Information such as sales 63 of the commodities appearing in the photographed image data 40 of the store may be included. It will be understood that such results may be output to paper by a printer.

A tabulation program 33 may be loaded and executed in the memory 11. The tabulation program 33 tabulates the shelf number information 45, the commodity codes 22, and the price information 23 in the commodity shelf information 50 in association with the photographing date and time in the auxiliary information 60. The sales 63 may be associated for tabulation. The tabulated information will be referred to as tabulated output information 65.

The operation of the commodity display information tabulation system 1 having the foregoing configuration will be overviewed.

Initially, the display state of commodities in each store is photographed. The photographed image data 40 is input to the commodity display information tabulation system 1 (hereinafter, also referred to as "the present system"). The present system 1 examines the photographed image data 40 to see which commodity is placed on which shelf and which column (referred to as "face number 47"). The present system 1 records the resulting commodity codes 22, shelf number information 45, and commodity image position data 42 as commodity shelf information 50. The commodity shelf information 50 may include the sales 63 of the commodities photographed in the store.

Intervals to photograph commodities are not limited in particular. Food items and other commodities that are frequently replaced may be photographed every day. Commodities that are replaced on a monthly basis, such as daily necessities, cosmetics, and automobile supplies, may be photographed every month. Note that even frequently-replaced commodities are rather desirably photographed on a weekly basis or a biweekly basis if display states in several hundreds to several thousands of stores are to be investigated. The reason is so that a large amount of data can be statistically examined and time needed for data acquisition and analysis can be secured.

The commodity shelf information 50 on a plurality of stores can be tabulated to grasp which commodity was offered in which store and in what display state as the tabulated output information 65. With the sales 63, the resulting sales amount can be grasped as the tabulated output information 65. Such information is used as a basis for manufacturers who manufacture the commodities to determine which position of display shelves their commodities should be placed in.

For retailers, the tabulated output information 65 is useful in determining which commodity can be placed in which position of display shelves to maximize store sales, i.e., in determining a so-called shelf allocation. Now, the present system 1 will be described in detail. The present system 1 can output such tabulated output information 65.

### <Photographing of Commodities>

The present invention makes it possible to grasp the display state of commodities in a number of stores in a short time. For that purpose, the display state of commodities needs to be recorded as image data 40. The image data 40 may be recorded as moving images or still images. Moving images are easy to determine the points where images are joined. The image data 40 is desirably such that a single image covers the top to bottom of commodity shelves to be processed. In other words, it is preferred that the entire vertical length of commodity shelves is included in a single piece of image data.

The lateral width of the commodity shelves need not be covered by a single piece of image data. The reason is that pieces of image data can be connected for successive processing.

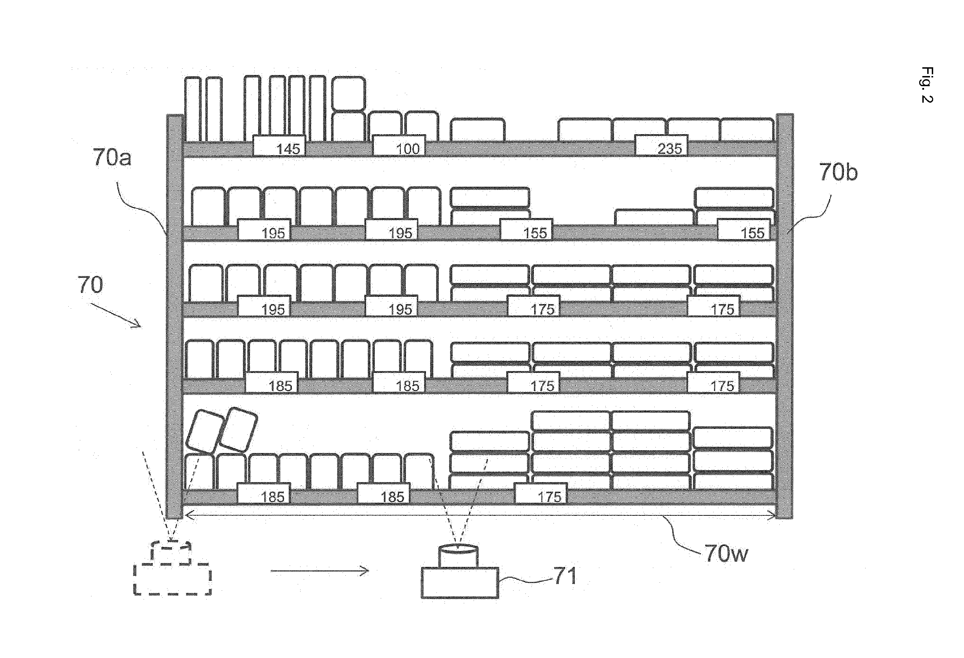

Fig. 2 is a diagram showing a situation for photographing commodities. Commodity display shelves 70 include five shelves. The width 70w is too large to photograph by a single shot of a camera 71. Various commodities are displayed on each shelf. The camera 71 moves in front of the commodity display shelves 70 at predetermined speed while photographing so that at least consecutively photographed pieces of image data 40 include the same commodities. The reason is so that adjoining pieces of image data 40 can be overlapped. The photographing method is not limited in particular, whereas the same photographing method is preferably used for uniform postprocessing. Suppose here that the image data is obtained by photographing the commodity display shelves 70 from the left end 70a to the right end 70b.

### <Processing of Image Data>

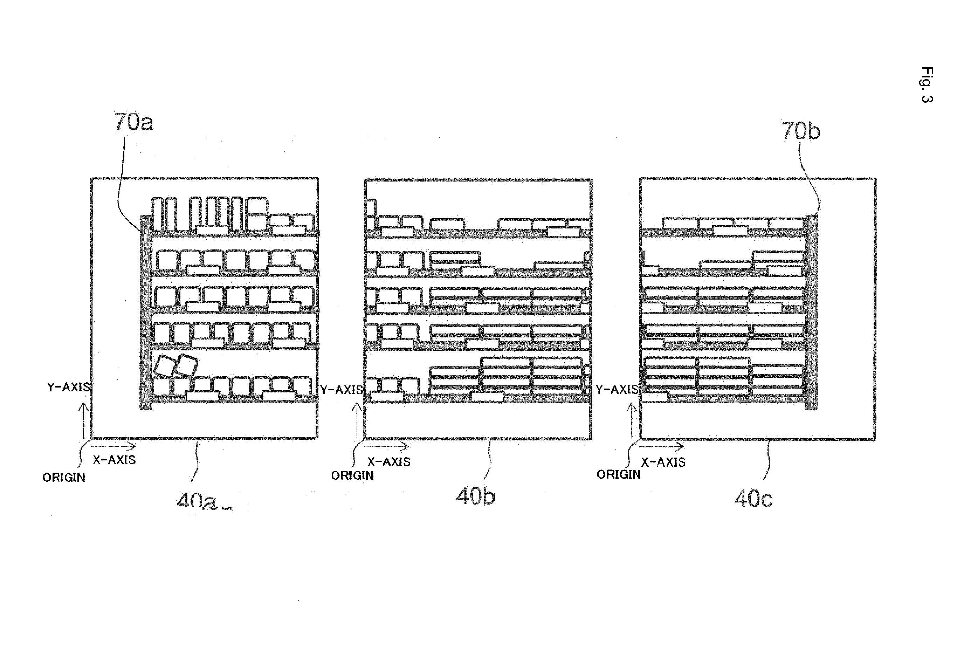

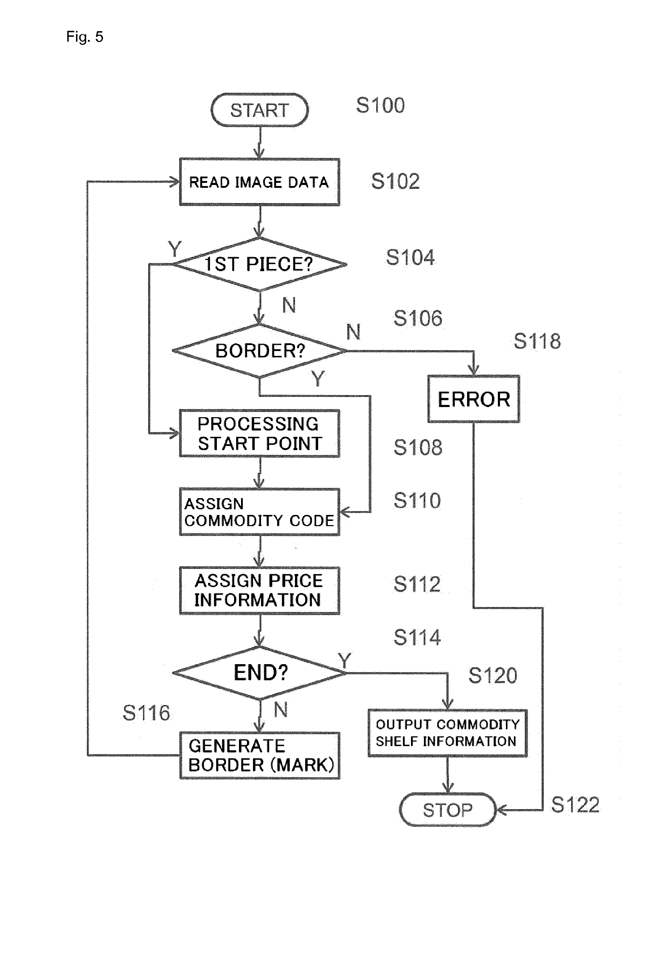

Fig. 3 is a diagram for explaining the operation of the search engine 31 according to the present invention. Fig. 5 is a flowchart showing the operation procedure. The following description will be given with reference to the procedure of Fig. 5 when needed. Referring to Fig. 3, there are a plurality of pieces of input image data 40, which will be denoted by the reference numerals 40a, 40b, and 40c, respectively. The search engine 31 sets coordinates in each of the pieces of image data 40 to be processed. In Fig. 3, the coordinate axes are set so that an origin falls on the bottom left of each image, with the X-axis toward the right and the Y-axis upward. It will be understood that the origin and the coordinates may be set by other methods.

Fig. 4 shows image data 40a as an example. The search engine 31 reads the image data 40 (step S102), and determines a processing start point 40s in the first piece of image data 40a. The determination is made by recognizing a vertical wall 70a of the commodity display shelves 70. In other words, the commodity display shelves 70 are determined to extend on the right of the vertical wall 70a. In terms of the processing procedure, the search engine 31 determines whether the piece of image data in process is the first one among the plurality of read pieces of image data 40 (step S104). If the piece of image data is the first one (Y in step S104), the search engine 31 determines the processing start point 40s (step S108).

Next, the search engine 31 cuts out commodity images 41 from the image data on the right of the processing start point 40s (the left end 70a of the commodity display shelves). The method of automatic cutting is not limited in particular. Any known method may be used. Fig. 4 shows an example where a commodity on the bottom shelf is cut out. The cut commodity image 41 is shown surrounded by a black frame.

The cut commodity image 41 is subjected to feature extraction, and compared with the registered commodity images 21 in the commodity database 20. The search engine 31 determines a similar or matching registered commodity image 21, and returns a corresponding commodity code 22 and commodity image position data 42 (step S110). The commodity image position data 42 may represent any coordinates of the cut commodity image 41. Examples include the coordinates of the barycentric position.

It will be understood that information on two points at the upper right and lower left (substantially four points) may be used. If there is no similar or matching registered commodity image 21, the search engine 31 returns null. A preferred output provides a distinction as to whether the cut image includes no commodity or a commodity that is not found in the commodity database 20.

Converted commodity codes 22 are shown to the top of Fig. 4. The commodities on the top shelf have commodity codes 22 of "A" and "B." There are six commodities A in a row with a space as much as one item, for which a commodity code "Ab" is returned. There are four commodities B, two of which are stacked and their commodity codes "B" are vertically arranged. The commodity codes 22 and the cut positions (commodity image position data) 42 of the commodity images 41 in the image data 40 are recorded so as to constitute commodity shelf information 50.

Such operations are performed on all commodity images 41 that can be cut out from the image data 40a in process. The commodity image position data 42 is suitably and desirably converted into distances from the processing start point 40S for subsequent tabulation.

After the commodity images 41, the search engine 31 cuts out price tag images 43 (step S110). The price tag images 43 are converted into price information 23 (step S112). The price information 23 and price tag image position data 44 are also recorded as commodity shelf information 50.

Next, the search engine 31 puts marks 51 on rightmost commodities in the image data 40a in process (step S116). An image including a column of the commodity images 41 with the marks 51 is assumed as a border 52 between pieces of image data 40. The method for generating a border 52 is not limited thereto. Any method may be used as long as an overlap with the next image data 40b can be seen. In Fig. 4, examples of commodity images 41 and price tag images 43 that have been cut out are shown with a black square mark (the reference numeral 35). More specifically, the images of the commodities and price tags on the second shelf from the bottom are the cut ones.

The search engine 31 then detects a border 52 in the next piece of image data 40b (step S106). If a border 52 is detected (Y in step S106), the search engine 31 cuts out commodity images 41 and price tag images 43 on the right of the border 52 and converts the cut images into commodity codes 22 and price information 23 in succession. If no border is found in step S106, the search engine 31 returns an error (step S118) and ends the processing since the input image data 40 may lack an overlap.

There is a right end 70b of the commodity display shelves 70 at the end (40c) of the image data 40 (see Fig. 3). The detection of the right end 70b ends the processing corresponding to a single set of commodity display shelves 70 (Y in step S120).

Subsequently, identification information (store ID 61) on the store where the image data 40 is photographed and the photographing date and time 62 are recorded as auxiliary information 60 which is included into the commodity shelf information 50 (step S120). It is preferred that the sales 63 of the commodities displayed on the commodity display shelves 70 are additionally acquired from the store's POS data or the like, and recorded as auxiliary information 60. The photographing date and time 62 desirably coincides with the recording date of the sales 63. The reason is that the coincidence facilitates association between the display state of commodities photographed and the sales of the commodities.

It should be appreciated that the photographing date and time 62 and the recording date of the sales 63 need not coincide as long as there is some correspondence available. For example, the sales 63 may be of several days before and after the photographing date and time 62. Statistical data such as average sales of a plurality of stores may be used. The sales 63 may be referred to as commodity sales information. The photographing date and time 62 is not limited to the date and time of photography, and may be the week or period of photography. The store identification information (store ID) is not limited to the identification of each individual store, and may include region or group information.

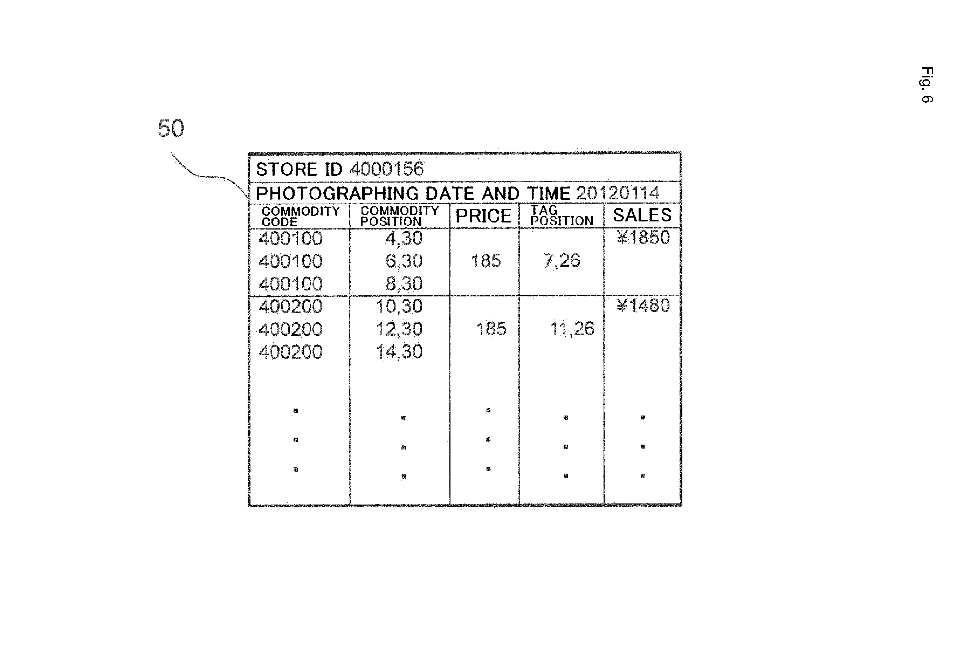

Fig. 6 shows an example of the commodity shelf information 50 at this point in time. Fig. 6 shows the commodities and price tags on the second shelf from the bottom (with black squares) in Fig. 4. The "commodity position" and "tag position" correspond to the commodity image position data 42 and the price tag image position data 44, respectively. The coordinates are converted values with the bottom left of the shelves as an origin. The "sales" field corresponds to the sales 63. For example, the "sales" field shows that sales for a commodity code 40100 was 1850 yen on the date of photography. If there are the same commodity codes, sales may be collectively recorded for any one of the commodity codes.

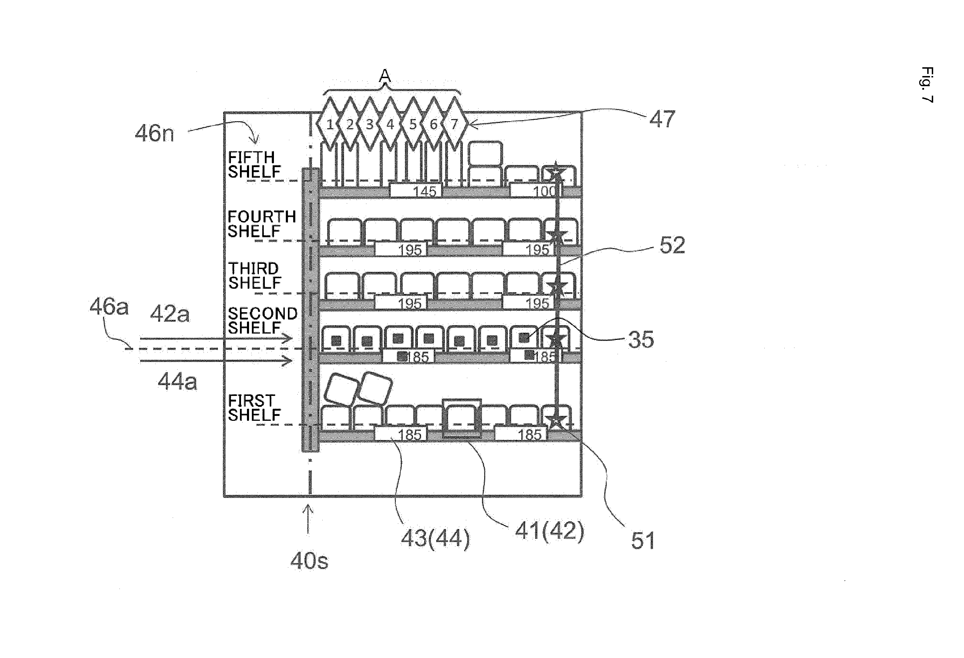

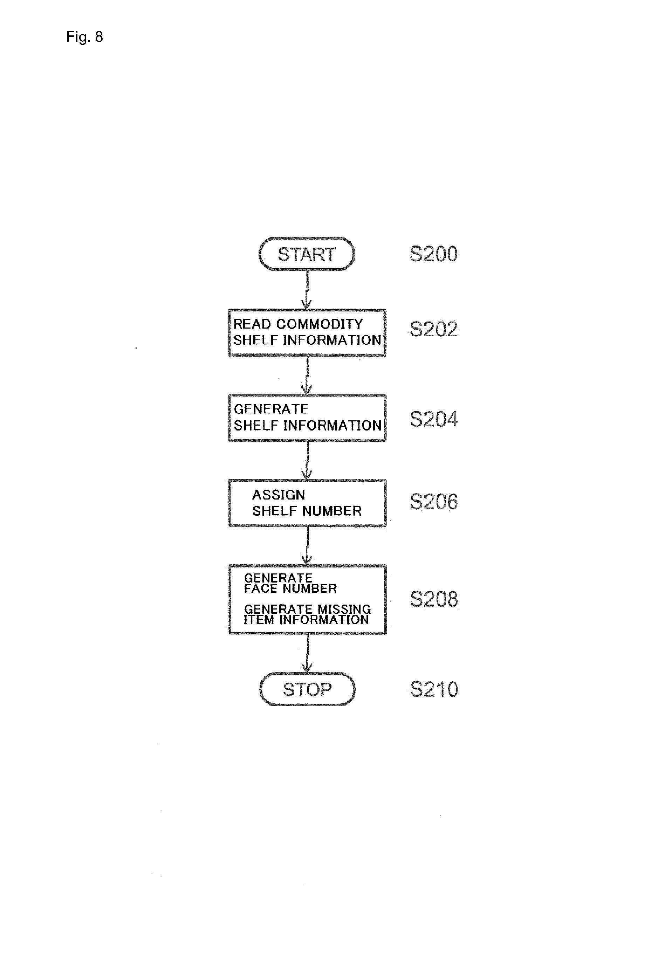

Next, the commodity shelf information 50 thus created is subjected to the image processing program 32. Fig. 7 is a diagram for explaining the operation. Fig. 8 shows the processing procedure.

When the image processing program 32 is executed (step S200), the image processing program 32 reads the commodity shelf information 50 (step S202). From the commodity shelf information 50, the image processing program 32 generates shelf information 46 between the commodity image position data 42 and the price tag image position data 44 (step S204). While the image processing program 32 runs solely on data, Fig. 7 will be described in conjunction with the denotations based on Fig. 4 for better visualization.

The image processing program 32 initially selects pieces of commodity image position data 42a and price tag image position data 44a that are closest in the Y direction on the image data 40. Fig. 7 shows a case where commodity images 41 with a black square 35 on the second shelf and price tag images 43 (also with a black square 35) lying below are selected. The average of the coordinates in the Y direction is assumed as shelf information 46a. It will be understood that other methods may be used in combination. The reason is that if a plurality of commodities are stacked on a shelf, the shelf information 46 may indicate a position higher than some commodities.

The shelf information 46 includes a straight line that runs from the left end to the right end of the commodity shelf information 50. The shelf information 46 may thus have only position information in the Y direction. Having generated all shelf information 46, the image processing program 32 assigns shelf numbers 46n (step S206). Fig. 7 shows a case where the shelf numbers are assigned like the first shelf and the second shelf from below. The maximum number of the shelves constitutes shelf number information 45. The shelf number information 45 may also be recorded as commodity shelf information 50. Assigning the shelf numbers 46n is equivalent to determining the number of shelves of the commodity shelves from the photographed image data 40.

Next, the image processing program 32 generates face numbers 47 with respect to the commodity shelf information 50 (step S208). A face number 47 refers to the number of identical commodity codes 22 arranged for the same shelf number 46n. For example, in Fig. 7, seven commodities having a commodity code "A" are arranged in a row on the fifth shelf (with one item missing).

The face number 47 of the commodities is seven. Suppose that there are three or more identical commodities arranged in a row and one(s) other than those at both ends is/are missing. Such commodities are obviously missing items, and the image processing program 32 generates missing item information 48 (step S208) and record the missing item information 48. The missing item information 48 may be recorded by recording missing item codes in place of commodity codes 22 in the commodity shelf information 50. Fig. 7 shows a case where face numbers 47 are given to the commodities having a commodity code A on the fifth shelf. The state of Fig. 7 is reflected on the data structure on the memory.

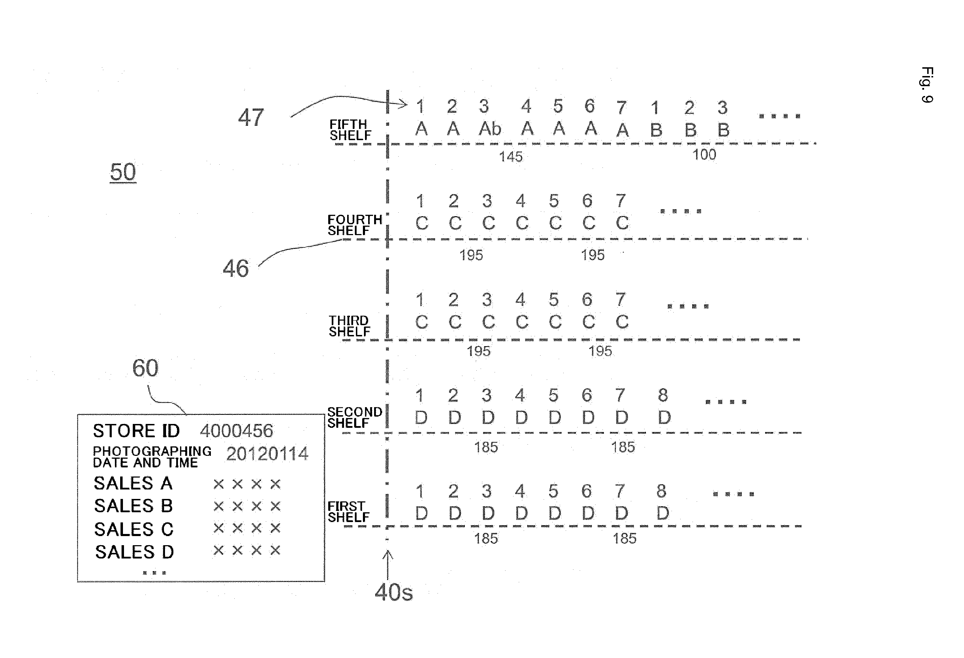

The above information may be output to paper as two-dimensional information. Fig. 9 shows a paper output of the commodity shelf information 50. Fig. 9 shows part of the commodity shelf information 50. The commodity shelf information 50 includes dotted lines which represent shelf information 46 on the shelves. Since face numbers 47 are of high importance, commodities are all shown with monospaced face numbers 47. The output commodity shelf information 50 includes auxiliary information 60 such as a store ID 61 that indicates the store and photographing date and time 62. Sales 63 may be output if any. Fig. 9 shows a case where the sales 63 of the commodities in 24 hours after photographing are printed. For ease of understanding, registered commodity images 21 may be pasted instead of the commodity codes 22.

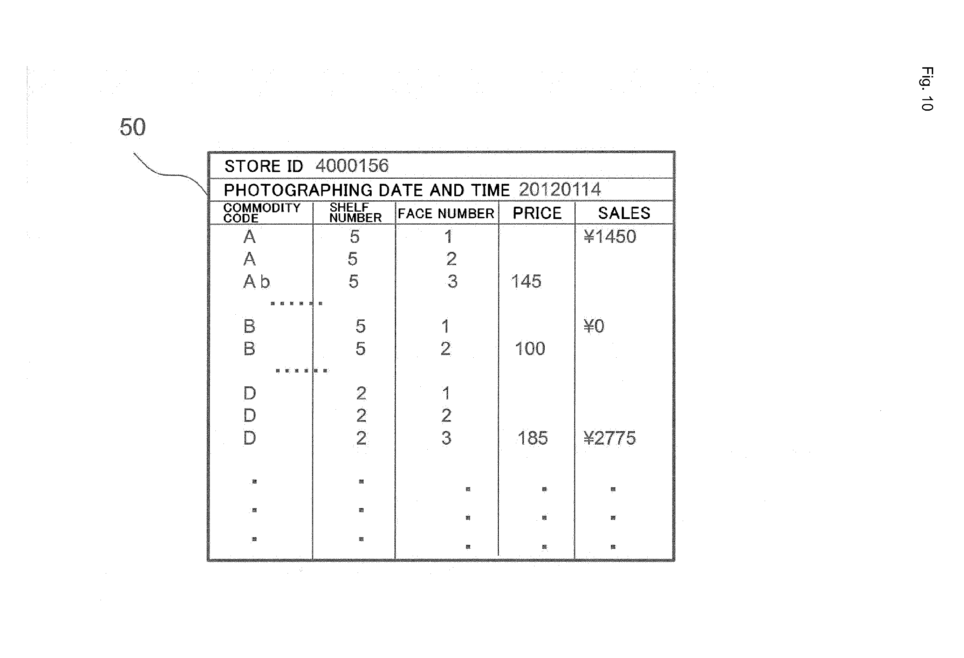

Fig. 10 shows the data structure of the commodity shelf information 50. The commodity shelf information 50 electronically has a data structure in which a commodity code 22, price information 23, shelf number information 45, a face number 47, missing item information 48, a store ID 61, photographing date and time 62, and sales 63 are associated as a single file. According to the commodity display information tabulation method of the present invention, a commodity code 22 can thus be index by a shelf number of the commodity shelves and a face number 47 from the left end. Such a data structure can be recorded on an appropriate recording medium. Examples of recording media available include disk-shaped recording media such as a hard disk, tape-like recording media, and known memories such as a semiconductor memory.

### <Tabulation>

Next, the tabulation operation of the present system 1 will be described for a case where such commodity shelf information 50 of a plurality of stores has been accumulated. Commodity sales, although relevant to the number of customers who come to the store, can depend largely on the mode of display of the commodities. For example, commodities may be displayed to increase face numbers 47 for higher sales. However, it may turn out that such display is hardly effective in terms of sales per face number 47 displayed. The tendency can be grasped through commodity-by-commodity, seasonal, or store location-based tabulation. Such information would be effective information in making a policy for shelf allocation.

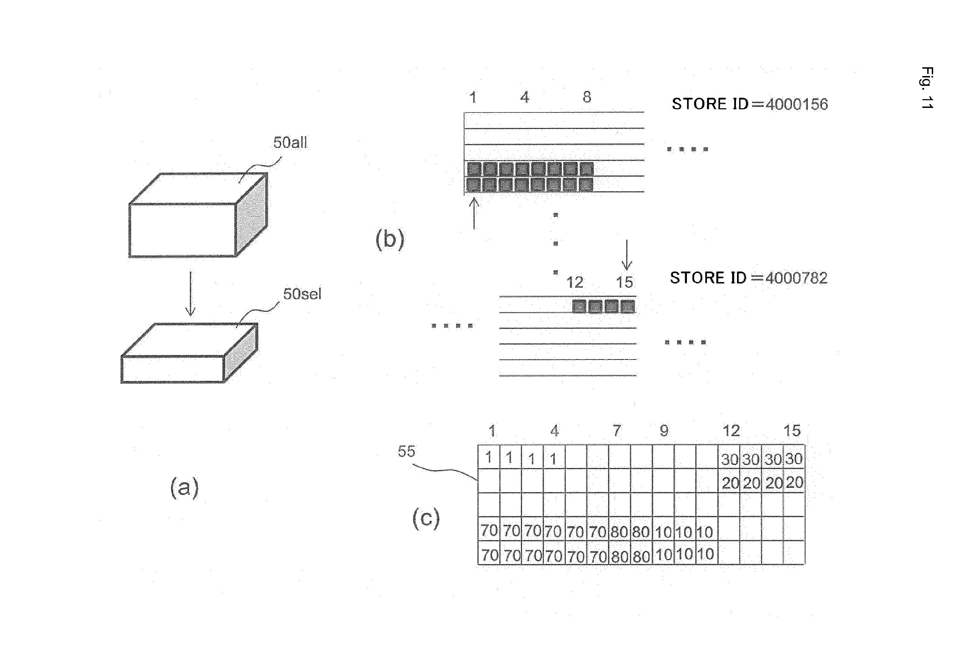

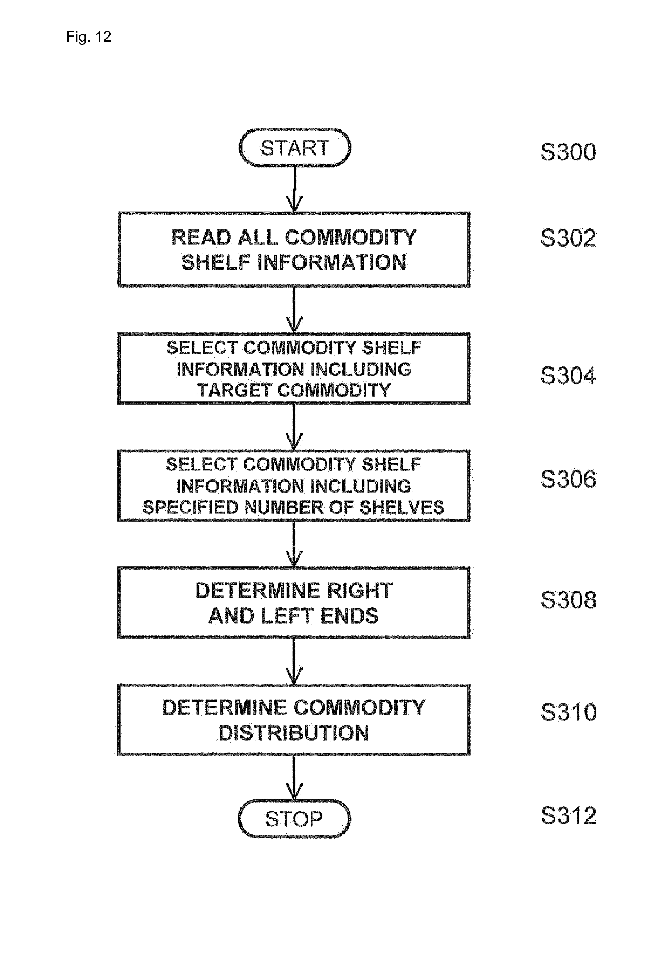

Figs. 11A to 11C show an example of tabulation according to the present system 1. Fig. 12 shows the flow of the procedure. When the tabulation program 33 is executed (step S300), the tabulation program 33 reads accumulated commodity shelf information 50all (step S302). The tabulation program 33 then selects pieces of commodity shelf information 50sel including the same commodity code 22 (step S304) and the same number of shelves (step S306) from the commodity shelf information 50all (Fig. 11A). The reason is that a comparison between sets of shelves having different numbers of shelves will not provide a comparison in terms of the mode of display of commodities. This reduces the number of pieces of commodity shelf information 50 to tabulate. Sets of shelves having not much difference in the number of shelves may be selected as having "the same number of shelves."

Next, the tabulation program 33 determines a left end and a right end from face numbers 47 that cover the areas of the specified commodity code 22 (Fig. 11B: step S308). In other words, a commodity closest to the left ends of the display shelves and one closest to the right ends of the display shelves are selected from the selected commodity shelf information 50sel. Here, face numbers 47 are counted as total face numbers from the left ends of the commodity shelves. More specifically, suppose that a commodity is the leftmost among those having the same commodity code 22 and there are other commodities between the left end of the commodity shelves and the commodity. In such a case, the face numbers of the other commodities are added to the face number 47 of the commodity.

Fig. 11B shows that target commodities were placed in rows from the left end of the shelves in a store whose store ID 61 is "4000156." In a store whose store ID 61 is "4000782," target commodities were placed with the right end of the target commodities at the 15th face of the commodity shelves.

In other words, according to the selected commodity shelf information 50sel, target commodities were displayed closest to the right end in the store whose store ID 61 is "4000782." As far as face numbers 47 are concerned, it is unknown whether the commodities were physically displayed to the right end of the shelves. The reason is that the widths (lengths) of the commodities from the left end up to the 15th face are not taken into consideration. It can be said at least that there were fourteen target commodities displayed between the left end of the commodity shelves and the 15th target commodity. It will be understood that the commodity shelf information 50 includes commodity image position data 42, from which physical positions can be determined.

The tabulation program 33 then determines the frequencies of commodity codes 22 according to the face numbers 47 between the left end and the right end (Fig. 11C: step S310). The resultant will be referred to as a commodity distribution 55. In Fig. 11C, zero frequencies are shown blank.

The commodity distribution 55 shows which position of commodity shelves having the same number of shelves a certain commodity was the most frequently placed in. For example, it can be seen from Fig. 11C that the commodity was placed in two rows at the bottom left in an overwhelming number of stores. The commodity was rarely displayed near the center of commodity shelves. Such information is particularly useful for manufactures to learn in which position their commodities are placed for sale.

The commodity distribution 55 and sales can be compared with those of competitors' commodities. Such information is extremely useful in requesting display positions of target commodities from retailers. Information on the tabulated stores and information on prices may be added to the commodity distribution 55. Such a commodity distribution 55 (tabulation result) may be recorded on a recording medium.

The commodity display information tabulation system 1 according to the present invention can render the display state of a large amount of commodities into data in a short time. Based on the data, the commodity display information tabulation system 1 can acquire a commodity distribution on commodity display shelves having the same number of shelves. Extremely useful information for creating a sales strategy and a policy for shelf allocation can thus be obtained.

The present system 1 is not limited to certain types of commodities and may be widely used for modes of sales where commodities are displayed on shelves. Since the display of commodities has only to be rendered into image data, the present system 1 may be applied to catalog sales and the like.

## Claims

1. A commodity display information tabulation method according to the present invention includes:
a step of cutting out a commodity image of a commodity from image data in which the commodity is photographed as displayed on commodity display shelves;
a step of searching a commodity database for a commodity code corresponding to the cut commodity image;
a step of determining the number of shelves of the commodity display shelves and generating shelf number information; and
a recording step of recording the commodity code, commodity image position data on the cut commodity image in the image data, the shelf number information, and auxiliary information together as commodity shelf information.

2. The commodity display information tabulation method according to claim 1, further comprising the steps of:
cutting a price tag image of a price tag on the commodity display shelves from the image data; and
recognizing a price from the price tag image and generating price information, and wherein
the recording step includes recording price tag image position data in the image data of the cut price tag image and the price information as the commodity shelf information.

3. The commodity display information tabulation method according to claim 2, further comprising the steps of:
pasting a registered commodity image corresponding to the commodity code to a position corresponding to the commodity image position data in a two-dimensional plane;
pasting the price information to a position

4. The commodity display information tabulation method according to claims 1 to 3, further comprising the step of generating the number of commodity codes consecutively arranged on the same shelf of the commodity display shelves as a face number, and wherein
the recording step includes recording the face number of the commodity codes as the commodity shelf information.
commodity shelf information.

5. The commodity display information tabulation method according to any one of claims 1 to 3, further comprising the step of generating missing item information among commodity codes arranged on the same shelf of the commodity display shelves, and wherein
the recording step includes recording the missing item information on the commodity codes as the commodity shelf information.

6. The commodity display information tabulation method according to any one of claims 1 to 3, wherein the auxiliary information includes at least information for identifying a store, photographing date and time of the image data, and commodity sales information of the store.

7. The commodity display information tabulation method according to any one of claims 1 to 3, further comprising the steps of:
extracting pieces of commodity shelf information including the same commodity code and the same number of shelves from the commodity shelf information recorded in the recording step; and
determining a commodity distribution from the extracted pieces of commodity shelf information, the commodities distribution being a frequency distribution with respect to each shelf and each position of the commodity shelves.

8. The commodity display information tabulation method according to claim 7, comprising the step of drawing the commodity distribution in a two-dimensional plane along with a line corresponding to a shelf on the basis of the shelf number information.

9. The commodity display information tabulation method according to any one of claims 1 to 3, wherein the image data in which a commodity is photographed as displayed on the commodity display shelves is supplied on a weekly basis.

10. A data structure of data generated from photographed image data of commodity display shelves on which a commodity is displayed, the data structure comprising:
a store ID for identifying a store;
photographing date and time;
a commodity code corresponding to the photographed commodity;
shelf number information indicating on which shelf of the commodity display shelves the commodity obtained from the image data is displayed; and
a face number for indicating what numbered face the commodity is from a left end of the shelf indicated by the shelf number information.

11. A data structure comprising a commodity frequency determined by integrating arrangement of a commodity code with respect to a face number for each piece of the shelf number information on the basis of pieces of data structure according to claim 10, the pieces of data structure including the same commodity code and the same shelve number information.

12. A recording medium on which the data structure of claim 10 is recorded.

13. A recording medium on which the data structure of claim 11 is recorded.
